# EUROPEAN PATENT APPLICATION

(11) **EP 2 252 041 A1**
(43) Date of publication of application: **17.11.2010**
(21) Application number: 10158914.1
(22) Date of filing: 01.04.2010
(51) Int. Cl.: H04M 3/533

(54) **Deleting a voicemail from a voicemail box in IMS network**

(30) Priority: 15.05.2009 IN CH11252009
(71) Applicant: Alcatel Lucent, 75008 Paris (FR)
(72) Inventor: Karthick, Rajapandiyan, 600032, CHENNAI (IN); Muthusamy, Muthiah, 600032, CHENNAI (IN)
(74) Representative: Nicolle, Olivier

(57) **Abstract**

Embodiments herein disclose a system and method for deleting last voice mail left by a calling party in a called party's voicemail. A calling party can subscribe for the service with the service provider. On subscription, calling party is given authorization for a special code called as service code; the service code is specific to every feature/Service, Calling party sends a request for deletion of last voice mail left by him in the called party's mail box. Request message contains the service code provided by the operator. The application server processes the request message and confirms the subscription of the calling party for the service. On confirmation of the service details, application server inserts a tag in the message. VMS then deletes the message if the message is not heard by the called party.

## Description

### FIELD OF INVENTION

This invention relates to telecommunications systems and, more particularly but not exclusively to deleting a voice mail message in IMS network systems.

### BACKGROUND

Existing mechanism offer call waiting and call forwarding services to manage a busy line of the caller. There are different call forwarding mechanism which include call forward unconditionally (CFU), call forward busy (CFB), call forward no answer (CFNA), and call forwarding on no replay (CFNR). In different call forwarding mechanism, calls from calling user are directed to the voice mail of the called user. Voice mail services allows called user to receive message from his caller's anytime.

When a caller's call is forwarded to voice mail box of the called party, caller leaves a message. Callers may, at a later point in time, realize that they left a wrong message or an inappropriate message, and may want to delete or modify the message that they left on the called party's voice mail.

Microsoft Outlook service enables a sender to replace his earlier messages or delete a messages left by the sender in the recipient's mailbox. However, the function works only if both sender and recipient use Microsoft exchange server as their mail server. One cannot delete a message that is sent to a called party's personal internet service provider (ISP) POP3 email account i.e. most popular email service providers such as Yahoo, Hotmail and so on. The drawback associated is both mail servers have to be configured to support the recall function.

This section introduces aspects that may be helpful in facilitating a better understanding, of the invention. Accordingly, the statements of this section are to be read in this light and are not to be understood as admissions about what is in the prior art or what is not in the prior art.

### SUMMARY

A method for a calling user to delete a voice mail from calling user, present in voice mailbox of a called user. The method comprises steps in which a calling user sends a message to network of calling user, wherein the message comprises of a service code and IMS Public User identity(PUID)/Uniform Resource Locator (URL) of called user. The network of calling user sends a message to network of called user. The network of called user deletes voice mail from voice mailbox of called user, on receipt of the message from network of calling user. The method further comprises of an application server present in network of calling user receives the message and adds a tag to the message. An Application server present in network of calling user sends the message with tag to the network of called user. Application server present in network of called user receives the messages with tag and sends a request to a voice mail server present in the network of called user to delete the voice mail from calling user present in voice mailbox. Both called user and calling user use Internet Protocol (IP) Multimedia Subsystem (IMS) networks, Calling user subscribes to a service for deletion of voice mails after recording. The network of calling user checks if calling user has subscribed to voice mail deletion service, before sending the message to network of called user using a service code. The network provides calling user with a service code on registering for voice mail deletion service. The voice mail server deletes latest unread voice mail from calling user present in voice mailbox of called user. The voice mail server requests for a confirmation from calling user, before deletion of voice mail, from voice mailbox of called user. The voice mail server sends an acknowledgement to calling user through network of calling user, on deleting voice mail from voice mailbox of called user.

An Application server is configured/Programmed to delete a voice mail from a calling user present in voice mailbox of a called user. Application server further comprising of means configured to check a message sent by calling user for service code, adds a tag to the message, if message contains service code and sends the message with tag to network of called user. The application server checks if calling user is subscribed to voice mail deletion service, before sending the message to network of called user. An application server enables a calling user to delete a voice mail from calling user present in voice mailbox of called user. Application server further configured, to check if a message received by application server contains a tag indicating a voice mail from calling user, present in voice mail box is to be deleted and sends a request to voice mail server of the network of called user to delete the voice mail. A voice mail server enables a calling user to delete a voice mail from calling user present in voice mailbox of a called user; voice mail server is configured to delete voice mail on receipt of a request from calling user. The voice mail comprises of means to send an acknowledgement to calling user on deletion of voice mail. The voice mail server further comprises of means to send a failure report to calling user, if voice mail is already accessed by called user.

These and other aspects of the embodiments herein will be better appreciated and understood when considered in conjunction with the following description and the accompanying drawings.

### BRIEF DESCRIPTION OF THE FIGURES

Some embodiments of apparatus and/or methods in accordance with embodiments of the present invention are now described, by way of example only, and with reference to the accompanying drawings, in which:

FIG. 1 is a system diagram illustrating the architecture of internet protocol multimedia subsystem (IMS) network, in accordance with the embodiments herein;

FIG. 2 illustrates the modules of application server of IMS network system, in accordance with the embodiments herein;

FIG. 3 is a flow diagram illustrating the process of deleting a voice mail, in accordance with the embodiments herein; and

FIGs. 4a and 4b are flow charts depicting the process of deleting a voice mail, in accordance with the embodiments herein.

### DESCRIPTION OF EMBODIMENT

The embodiments herein and the various features and advantageous details thereof are explained more fully with reference to the non-limiting embodiments that are illustrated in the accompanying drawings and detailed in the following description. Description of well-known components and processing techniques are omitted so as to not unnecessarily obscure the embodiments herein. The examples used herein are intended merely to facilitate an understanding of ways in which the embodiments herein may be practiced and to further enable those of skill in the art to practise the embodiments herein. Accordingly, the examples should not be construed as limiting the scope of the embodiments herein.

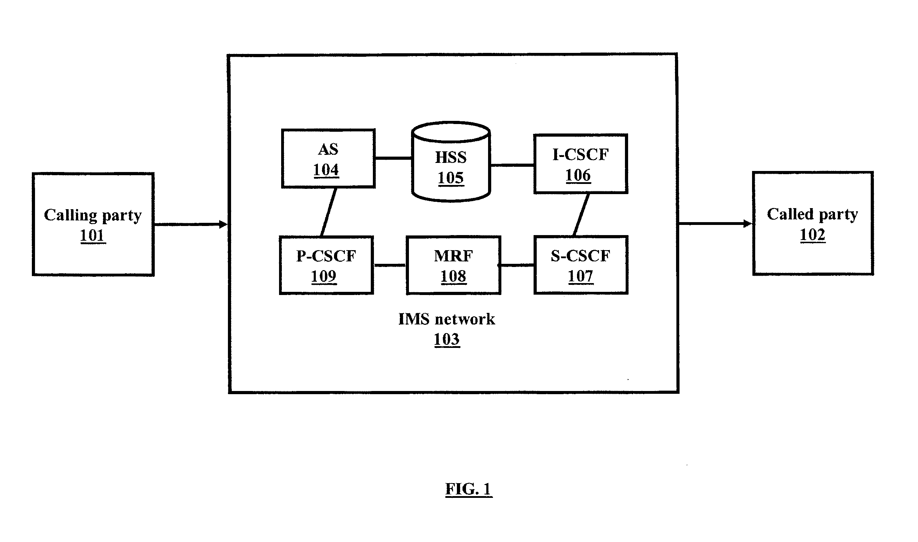

The embodiments herein achieve a method for adaptively deleting a voice message from the called party's voice mail in IMS networks by employing appropriate mechanism thereof. Referring now to the drawings, and more particularly to FIGS. 1 through 4, where similar reference characters denote corresponding features consistently throughout the figures, there are shown embodiments.

The embodiments herein disclose a system and method for deleting the last voice mail left by a calling party in a called party's voicemail. A calling party, who may want to use voicemail deletion service, can subscribe for the service with his service provider. On subscribing, a calling party is assigned with a special code called as service code. The service code is a unique code and specific to every user who registers for the service. Nature of service code can be of the form #1234, *111, #123* and so on. User also referred to as calling party can delete a voice mail anytime he wishes to, left in a called party's voice mail box. Calling party sends a request for deleting the last voice mail left by him in the called party's mail box. The request may be sent in the form of a request message, which contains the service code provided by the network operator and the Public User Identity (PUID) of the called party. In an IMS network, the PUID may be a Session Initiation Protocol (SIP) Uniform Resource Identifier (URI) or a telephone Uniform Resource Locator (URL). A SIP URI is a user's SIP phone number and resembles an e-mail address. The SIP URI may have a format username@domain or username@IPaddress. A telephone URL is used for specifying the location of a terminal in the phone network and the connection types (modes of operation) that can be used to connect to that entity. Telephone URL can be used to specify voice calls (normal phone calls, answering machines and voice messaging systems), facsimile calls and data calls. The telephone URL includes the subscriber (telephone) number of the target terminal and the necessary parameters to be able to successfully connect to the target terminal. Application server processes request message and confirms the subscription of the calling party for voicemail deletion service. On confirmation of service details, the application server inserts a tag in the message. The tag may contain a message to delete the voice mail from called party's voice mail server. The voice mail server (VMS) checks if the message is already heard by the called party. In case the message is not heard, VMS will delete the message. On the other hand, if the message is already heard, an error message is sent to the calling party notifying the calling party that the message has already been heard by the called party.

FIG. 1 is a system diagram illustrating the architecture of internet protocol multimedia subsystem (IMS) network, in accordance with the embodiments herein. The system comprises a calling party 101, called party 102 and IMS network 103. Calling party 101 is a user who initiates a call or the one who has left a voice mail and desires to delete the voice mail. Called party 102 is a user to whom the calling party makes a call or the one to whom the voice mail is left already. IMS network 103 comprises of an Application server (AS) 104, Home server (HSS) 105, Interrogating call session control function (I-CSCF) 106, Serving call session control function (S-CSCF) 107, Media resource function (MRF) 108 and Proxy call session control function (P-CSCF) 109. AS 104. is the core of IMS network 103 and handles all the functions of the network. AS 104 synchronizes different components of the network and hosts and executes different services for the network. AS 104 interfaces with S-CSCF 107 using session initiation protocol (SIP). Depending on the actual application, AS 104 can operate in SIP proxy mode, SIP user agent mode and so on. AS 104 can be located in the home network or in an external network. When located in the home network, AS 104 queries HSS 105 with diameter interface or similar protocol. AS 104 handles user requests, verifies subscription details for different services for different users and addresses users' request accordingly. AS 104 modifies user requests when required, and inserts delete message tag in the request messages or in the invite message. All messages are processed through AS 104. HSS 105 is a master user database that supports IMS network entities, which actually handles calls. HSS 105 contains subscription related information such as profiles of users and performs authorization and authentication of users. HSS 105 also provides information about location of users. In addition, HSS 105 contains information about user identity, allocated S-CSCF name, roaming profile and any service related information. HSS 105 facilitates user to access packet and circuit domains through authorization. AS 104 queries HSS 105 for confirmation of any subscription related information of users. I-CSCF 106 is within the home network and determines the S-CSCF with which a user has to register. I-CSCF 106 queries the HSS 105, HSS 105 checks if user is allowed to register with the network and returns a name and authorization for a particular user. Once I-CSCF 106 establishes the S- CSCF 107 to be used, I-CSCF 106 can be removed from signaling path. I-CSCF 106 is also used in call set up in the called party's network to resolve called party's S-CSCF 107. All call and message handling functions are performed through S-CSCF 107. S-CSCF 107 registers users and provides services to users. S-CSCF 107 performs routing, translation, provides billing information to media systems, maintains session timers, and interrogates HSS 105 to retrieve information relating to authentication, user profile, and service initiation. S-CSCF 107 sits in the signaling path of messages and can inspect every message. S-CSCF 107 decides on the AS to which an SIP request is forwarded to provide services and also enforces policies of the network operator. MRF 108 performs all media related functions such as media manipulation, and playing of tones and announcements. MRF 108 is divided into Media Resource Function Controller (MRFC) and Media Resource Function Processor (MRFP). MRFC is a signaling plane node that acts as SIP user agent to S-CSCF 107 and MRFP is a media plane node that implements all media related functions. P-CSCF 109 is usually the first point of contact for an IMS terminal during registration. A particular P-CSCF 109 is assigned to an IMS terminal and the assignment does not change during registration process. P-CSCF 109 ensures that correct SIP session messages are passed to appropriate S-CSCF 107. P-CSCF 109 acts as the path for signaling messages and examines every message.

Let us consider that calling party 101 leaves a voice mail to called party 102, when a call from calling party 101 is forwarded to voice mail of called party 102. Later, calling party 101 may want to delete the voice mail for some reason. Since calling party 101 has subscribed for voicemail deletion service, he sends a request for deleting last message in the voice mail of the called party 102. AS 104 modifies the invite message for deletion of voice mail and inserts deletion tag in the request message. Finally, terminating side AS sends the request message to VMS for deletion of voice mail, VMS checks if the voice mail is already heard by called party 102. In case the message is not heard by the called party 102, VMS deletes the message. If the message is already heard, VMS sends an error message. Further, the error message is sent to intimate calling party 101 that an attempt to delete the message failed.

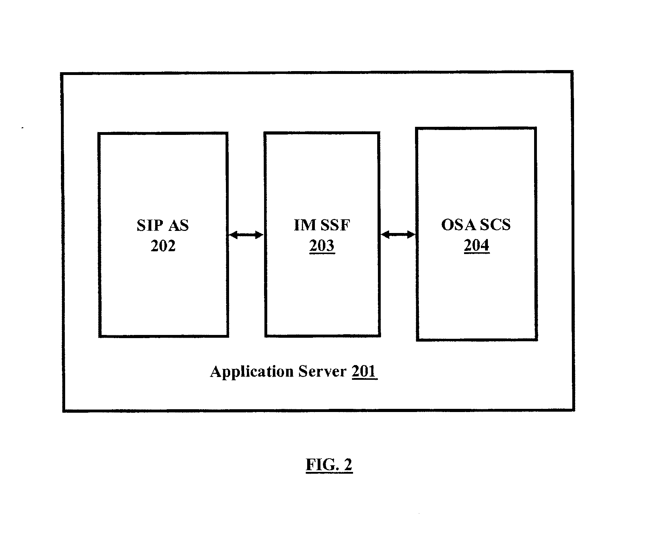

FIG. 2 illustrates the modules of application server of IMS network system, in accordance with the embodiments herein. In a preferred embodiment, Application server 201 in an IMS network comprises a Session Initiation Protocol Application Server (SIP AS) 202, Internet Protocol Multimedia Service Switching Function (IM SSF) 203 and Open Service Access Service Capability Server (OSA-SCS) 204. Application server in combination with the components performs all the processing functions of the network. AS 201 hosts and executes services of the network. AS 201 interfaces with the S-CSCF using session initiation protocol (SIP). Depending on the actual service, AS 201 can operate in SIP proxy mode, SIP user agent mode or SIP back to back user agent mode. AS 201 can be located either in the home network or in an external network. When located in the home network, AS 201 queries the HSS 106 with diameter interface or mobile application part interface. SIP AS 202 is a native IMS application server. SIP AS 202 performs different functions such as checking subscription details of the calling parties, two ensure the service is provided to only registered users, inserting delete function tag in the invite message, sending requests to VMS for deleting messages and the like. IM SSF 203 interfaces with the Customized Applications for Mobile Network Enhanced Logic (CAMEL) for application servers using CAMEL application part. The basic call state models are logically located in IM SSF 203. IM SSF 203 performs mapping process between the SIP methods passed across the IP Multimedia Subsystem Service Control Interface (ISC) and the detection points, used to initiate the dialogue with Camel Service Environment (CSE). OSA-SCS 204 interfaces with the OSA framework application server. OSA-SCS acts as a secure gateway between the underlying network and the application within the OSA architecture. The OSA architecture provides a standard interface through which the developers can design services that can interact with the functions within the network.

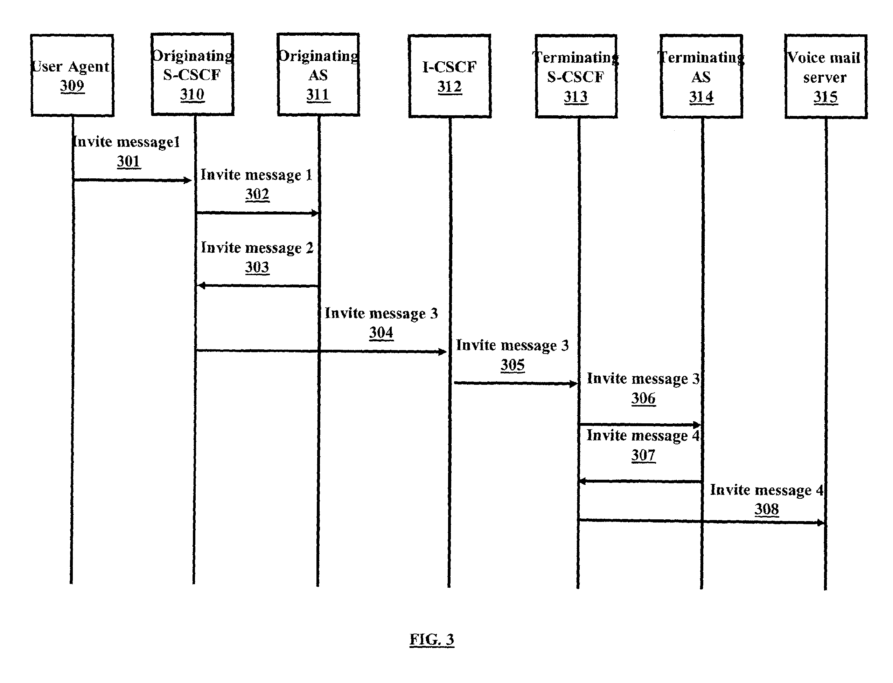

FIG. 3 is a flow diagram illustrating the process of deleting a voice mail, in accordance with the embodiments herein. In a preferred embodiment calling party 101 may have left a voice mail for the called party 102. Calling party 101 may want to delete the earlier message as there may be some error in conveying information or the message was sent to the wrong person. Calling party 101 may be required to register for voicemail deletion service with the network service provider. On registration for the service, the service provider will provide an authorization to the calling party 101 for that particular voicemail deletion service through a "voicemail deletion service code". Service code is specific to every feature/service. Allotment of service code will entirely depend on the operator. Whenever the calling party 101 desires to use the service, he needs to enter the service code first to activate the service, followed by the Public User Identity (PUID) of the called party 102r. A request for deletion of the voice mail from the mail box of called party 102 is sent by the User Agent (UA) 309 of the calling party 101 in the form of an invite message. The invite message may include any standard message such as INVITE and the like, however not limited to the same. UA 309 sends (301) the invite message to originating S-CSCF 310. The invite message contains the Public User Identity (PUID) of the destination and service code assigned by the network operator. In an embodiment, service code can be a unique combination of special characters and numbers. As an example #2345*, *1234# and so on. Originating S-CSCF 310 examines the invite message and handles the routing functions. The invite message is sent (302) to the originating AS 311. Originating AS 311 examines the invite message and checks the profile of calling party 101 to determine if the calling party 101 has subscribed for voicemail deletion service. Originating AS 311 verifies the service code to identify the calling party 101. If calling party 101 is a registered user, the request is processed further. Originating AS 311 further modifies the universal resource location (URL) and inserts a delete tag in the invite message. The delete tag is addressed to the called party's voice mail box. Modified invite message is sent (303) to Originating S-CSCF 310, as all the message and call handling functions are performed through the S-CSCF. Originating S-CSCF 310 will insert the P-asserted identification address in the invite message; which contains the Calling party address. The invite message is then sent (304) to I-CSCF 312. I-CSCF 312 establishes the S-CSCF to which the message is to be sent and in the case it is terminating S-CSCF 313. Invite message is then forwarded (305) by I-CSCF 312 to Terminating S-CSCF 313. Terminating S-CSCF 313 recognizes the terminating AS to which invite message is to be sent and message is sent (306) to Terminating AS 314. Terminating AS 314 checks for delete voice mail tag in the invite message. If the invite message does not contain delete tag an error message is sent. Terminating AS 314 sends a request to the VMS, through Terminating S-CSCF 313, to delete recently added voice mail in the voice mail box of the called party 102. Terminating AS 314 inserts source and destination address in the message and further the invite message is sent (307) to Terminating S-CSCF 313. Terminating S-CSCF 313 then forwards (308) the invite message to VMS 315. VMS 315 checks if the voice mail is already heard by the called party 102. In case the message is not yet heard by the called party 102, VMS 315 processes the delete request and the last message left by calling party 101 in the called party's voice mail is deleted. On the other hand, if the message is already heard by called party 102, an error message is produced. The error message intimates calling party 101 that his attempt to delete the last message failed. In another embodiment, consider the calling party 101 has left more than one voice mail in the called party's 102 mail box and wishes to delete all the messages. In such a case calling party 101 can send a request to delete the message each time by entering the service code for every message to be deleted. There is no provision of deleting all the messages left by a single caller at a time. Hence, for each message which is desired to be deleted the service code is to be sent along with the request to delete the message.

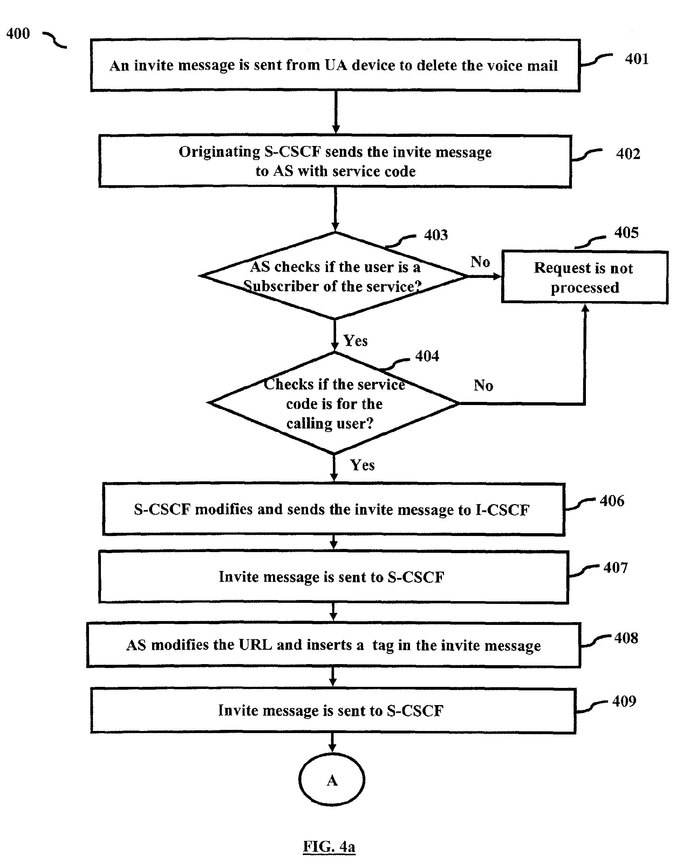

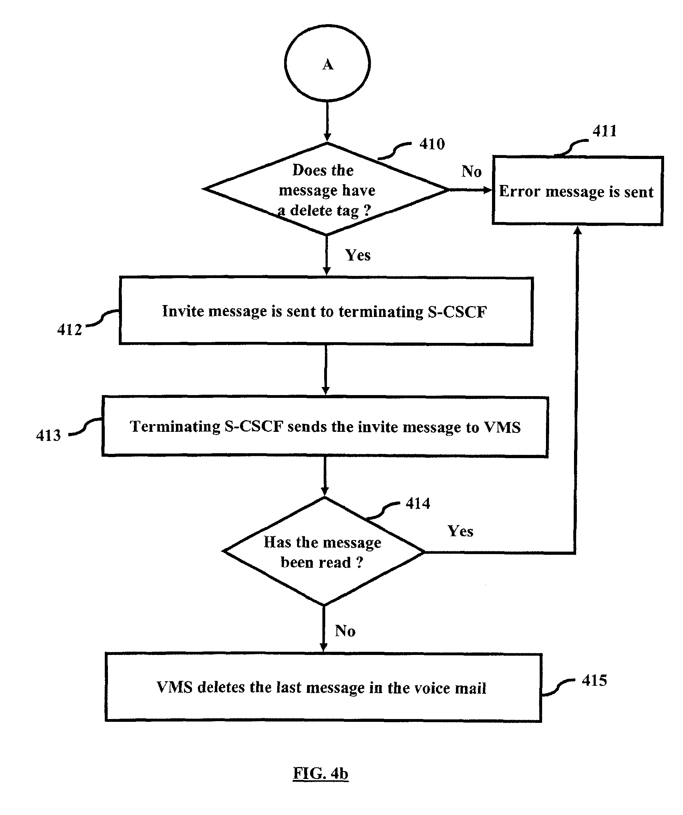

FIGs. 4a and 4b are flow charts depicting the process of deleting a voice mail, in accordance with the embodiments herein. In a preferred embodiment, calling party 101 registers with the user for the service. The subscription can be for any type of service such as call forward unconditionally, call forward on no reply, and call forward on no answer and the like. On registration for the service, service provider will allot a service code to the calling party 101. Service code is a unique code that allows access to the service of deleting voice mails; service code is usually a combination of numbers and special characters. The form of the service code entirely depends on the operator. Calling party 101 makes a call to the called party 102. Called party 102 is busy and the calling party 101 leaves a voice mail in called party's voicemail box. Calling party 102 may like to delete the voice mail left by him in the called party's mail. Calling party 101 sends a request for deleting the voice mail in the invite message. The invite message contains service code and the Public User Identity (PUID) of the called user 102.. The invite message is sent (401) to Originating S-CSCF 110. The invite message can include INVITE and the like. Originating S-CSCF 110 sends (402) the invite message to Originating AS 311 along with the service code in the message. Originating AS 311 checks (403) for subscription details of the calling party 101 to verify if the calling party 101 is a registered user for voicemail deletion service. Originating AS 311 also checks (404) for the service code of the calling user 101, in order to verify appropriate code for calling party 101. If calling party 101 has not registered for the service, request is not processed further and an error message is sent (405) to calling party 101. If the calling party 101 has subscribed for service, the request is processed. AS 311 modifies (406) the invite message by inserting a tag for deleting the voice mail and also inserts a URL in the message. AS 311 sends (407) the modified invite message to Originating S-CSCF 310 as all call and message processes are routed through S-CSCF. Originating S-CSCF 310 modifies the invite message by inserting SIP P-asserted address in the message. The invite message is then sent (408) to I-GSCF 312. I-CSCF 312 establishes the S-CSCF to which the message is to be sent and in this case it is the terminating S-CSCF 313. The invite message is sent (409) to S-CSCF 313. S-CSCF 313 sends the invite message to Terminating AS 314. Terminating AS 314 checks (410) if the message contains a delete tag. If the message does not have a delete tag an error message is produced (411) and the request is not processed. On confirming the delete tag in the message, invite message is sent (412) to Terminating S-CSCF 313 with source and and the Public User Identity (PUID) of the called user 102 in the message. Further, the Terminating S-CSCF 313 sends (413) the invite message to VMS 315. VMS 315 makes a check (414) if the voice mail is already heard by the called party 102. In case the voice mail is heard, an error message is produced to intimate calling party 101 that the attempt to delete the message was not possible as the message is already heard by the called party 102. On the other hand, if the message is not yet heard, VMS sends a message to the calling party 101 asking (415) for confirmation to delete the last voicemail left by calling party 101. On obtaining confirmation from the calling party 101, VMS 315 deletes (416) the message from called party's voice mail without the knowledge of called party 102. VMS 315 checks (417) if the calling party 101 would like to delete any more messages left by him in called party's mailbox. In case the calling party 101 likes to delete more then one message, an invite message is sent to the AS along with the service code and the Public User Identity (PUID) of the called user 102 .to delete the message and the sequence of steps are repeated. An acknowledgment may be sent (418) to calling party 101 indicating the end of process. Acknowledgment may be in the form of a message or an announcement or the like. Deletion of the message is carried out in the last in first out order (LIFO) i.e. the last stored message is deleted first. Also, a calling party 101 has access to delete only messages left by him and not any other calling party 101. The various actions in method 400 may be performed in the order presented, in a different order or simultaneously. Further, in some embodiments, some actions listed in FIGs. 4a and 4b may be omitted.

In an embodiment, calling party 101 may have left more than one message in the voice mail of the called party 102. The Voice mail server 315 stores the message in a specific order. The messages left by the calling parties are stored in one index and calling parties' numbers are stored in another index. The method of indexing data differently allows an easy access of data to VMS 315. When a particular caller desires to delete the last message left by him, he sends a message to VMS 315 to delete the message. VMS 315 is an intelligent server that is initially fed with logic to identify requests and process them accordingly. VMS 315 will first check if the message is already heard by called user. In case the message is heard, VMS 315 will send an error message to the calling party 101 about the failure of the attempt to delete the message. In case, the message is not yet heard by the called party 102, VMS 315 will delete the message. Indexing allows deleting the message in LIFO order i.e. the last message stored is deleted first. The service logic stored in VMS 315 is such that, the access is for the last message stored. The service also allows obtaining a confirmation from the calling party 101 just before deleting the message. The confirmation can be in the form of a response message that queries the calling party 101 to confirm the deletion with a yes or no or in the form of an announcement. In addition the calling party 101 can be sent an acknowledgment after the message is deleted. If the calling party 101 wishes to delete more then one message left by him in called party's voicemail, he needs to send a separate request message for every message to be deleted along with the service code.

The description and drawings merely illustrate the principles of the invention. It will thugs be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method for a calling user to delete a voice mail from said calling user present in voice mailbox of a called user, said method comprising steps of
said calling user sending a message to network of said calling user, wherein said message comprises of a service code and Public User Identity (PUID) of said called user;
said network of said calling user sending said message to network of said called user; and
said network of said called user deleting said voice mail from said voice mailbox of said called user, on receipt of said message from said network of said calling user.

2. The method, as claimed in claim 1, wherein said method further comprises steps of
an application server present in said network of said calling user receiving said message;
said application server present in said network of said calling user adding a tag to said message;
said application server present in said network of said calling user sending said message with said tag to said network of said called user;
an application server present in network of said called user receiving said message with said tag; and
said application server present in network of said called user sending a request to a voice mail server present in said network of said called user to delete said voice mail from said calling user present in said voice mailbox.

3. The method, as claimed in claim 1, wherein said called user and said calling user use Internet Protocol (IP) Multimedia Subsystem (IMS) networks.

4. The method, as claimed in claim 1, wherein said calling user subscribes to a voice mail deletion service.

5. The method, as claimed in claim 1, wherein said network of said calling user checks if said calling user has subscribed to said voice mail deletion service, before sending said message to said network of said called user using a service code, wherein said network provides said calling user with a service code on registering for said voice mail deletion service.

6. The method, as claimed in claim 1, wherein said voice mail deleted is the latest unread voice mail from said calling user present in said voice mailbox of said called user.

7. The method, as claimed in claim 1, wherein said voice mail server requests for a confirmation from said calling user, before deletion of said voice mail from voice mailbox of said called user..

8. The method, as claimed in claim 1, wherein said voice mail server sends an acknowledgement to said calling user through network of said calling user, on deleting said voice mail from voice mailbox of said called user.

9. An Application server configured to delete a voice mail from a calling user present in voice mailbox of a called user, said application server further comprising of at least one means configured for
checking a message sent by said calling user for service code;
adding a tag to said message, if said message contains said service code; and sending said message with said tag to network of said called user.

10. The application server, as claimed in claim 9, wherein said application server is configured to check if said calling user is subscribed to voice mail deletion service, before sending said message to said network of said called user.

11. An application server enabling a calling user to delete a voice mail from said calling user present in voice mailbox of said called user, said application server further comprising of at least one means configured to
check if a message received by said application server contains a tag indicating a voice mail from said calling user present in said voice mail box is to be deleted; and
send a request to voice mail server of said network, of said called user to delete said voice mail.

12. A voice mail server enabling a calling user to delete a voice mail from said calling user present in voice mailbox of a called user, said voice mail server comprising of at least one means configured to delete said voice mail on receipt of a request from said calling user.

13. The voice mail server, as claimed in claim 12, wherein said voice mail server further comprises of means to send an acknowledgement to said calling user on deletion of said voice mail.

14. The voice mail server, as claimed in claim 12, wherein said voice mail server further comprises of means to send a failure report to said calling user, if said voice mail has been accessed by said called user.
